# EUROPEAN PATENT APPLICATION

(11) **EP 4 837 932 A1**
(43) Date of publication of application: **11.11.2026**
(21) Application number: 25752545.1
(22) Date of filing: 06.02.2025
(51) Int. Cl.: C08L 9/06, C08L 57/02, C08K 3/36, C08K 3/04, B60C 1/00

(54) **TIRE RUBBER COMPOSITION FOR SUMMER AND VEHICLE TIRE USING SAME**

(30) Priority: 06.02.2024 KR 20240018402; 05.02.2025 KR 20250014672
(71) Applicant: HANKOOK TIRE & TECHNOLOGY CO., LTD., Gyeonggi-do 13494 (KR)
(72) Inventor: JEON, Hyerin, Daejeon 34127 (KR)
(74) Representative: Isarpatent
(86) International application number: PCT/KR2025/099327
(87) International publication number: WO 2025/170452

(57) **Abstract**

The present invention relates to a rubber composition for a tire and a vehicle tire using the same and, more specifically, to: a rubber composition for a tire, which is suitable for high-temperature and high-humidity summer weather, has excellent wear resistance and rolling resistance, and has improved grip force on a wet road surface; and a pneumatic tire for a vehicle using same.

## Description

### Technical Field

The present disclosure relates to a rubber composition for a tire and a vehicle tire using the same. More particularly, the present disclosure relates to a rubber composition for a tire, which is suitable for high-temperature and high-humidity summer weather, has excellent wear resistance and rolling resistance, and has improved grip performance on wet roads, and a vehicle pneumatic tire using the same.

### Background Art

In the tire industry, extensive research is being conducted to simultaneously improve the mechanical properties and fuel efficiency of tires. Conventional rubber compositions typically use elastomeric polymers such as natural rubber, polybutadiene, polyisoprene, and polystyrene-butadiene rubber, and generally contain reinforcing fillers to improve the mechanical properties of rubber.

Conventionally, carbon black was the most widely used due to its characteristics, such as surface affinity with rubber, high specific surface area, and developed structure. However, silica has recently been used in place of carbon black to reduce rolling resistance and achieve excellent wet grip performance.

In fact, when silica is used as a filler in a tread compound, along with a silane coupling agent, fuel efficiency can be reduced by approximately a value between 3 and 4% compared to tires with carbon black-based treads, and wet grip performance can be achieved. However, conventional silica is produced from sand and extracted from specific minerals, such as quartz or silica sand. These natural resources may be in danger of running out in the future, and it is necessary to replace them with sustainable alternatives.

Furthermore, while conventional techniques have attempted various methods to simultaneously improve mechanical properties, wear resistance, and rolling resistance in rubber compositions, there remains a technical challenge in achieving excellent tread wear resistance, excellent wet grip performance, and reduced rolling resistance.

Generally, since wear resistance, wet grip, and rolling resistance of tires are in a trade-off relationship, improving wear resistance typically reduces wet grip performance.

Therefore, there is a need to develop techniques that simultaneously improve wet grip performance and mechanical properties. Therefore, while hydrocarbon polymer additives with a higher glass transition temperature than rubber compositions are sometimes added to improve the wet grip performance of tires, technical limitations still exist in overcoming the problem in trade-off relationship.

As related art, Korean Patent Application Publication No. 2010-0058727 proposed a mix of silica and general-purpose carbon black. However, this rubber composition has limitations in meeting consumer's requirement performance for fuel efficiency and wet grip performance.

Furthermore, as a technique designed to simultaneously improve wear resistance and driving performance, Korean Patent Application Publication No. 2009-0046427 proposed a rubber composition containing microcapsules filled with phase transition materials.

Meanwhile, the tire industry is conducting research on various materials and design techniques to develop tires suited to specific weather conditions. Tires are broadly classified into three types based on the season in which they are used. The category includes all-season tires, summer tires, and winter tires. Each tire has different characteristics suited to a specific season and is designed to suit the characteristics of its manufacturing. During design, rubber compounds with different properties suited to each season are used.

Summer tires are designed to provide optimal performance on both dry and wet roads at temperatures of 7°C or higher, and demand for summer tires with improved wear resistance and reduced rolling resistance has recently grown. As a result, there is a need to develop tires that offer improved wear resistance and rolling resistance while maintaining excellent traction on wet roads.

### Document of Related Art

### Patent Document

(Patent Document 1) Korean Patent Application Publication No. 2010-0058727
(Patent Document 2) Korean Patent Application Publication No. 2009-0046427

### Disclosure

### Technical Problem

To solve the above-mentioned problem, an objective of the present disclosure is to manufacture a tire rubber composition for summer, which is capable of improving fuel efficiency and wet grip performance by adding plant-based silica, and to provide a tire for summer using the same.

### Technical Solution

In order to achieve the above objective, according to a proper aspect of the present disclosure, there is provided a tire rubber composition for summer, which includes: raw rubber including unsaturated carbon bonds, a hydrocarbon polymer, and plant-based silica, wherein a glass transition temperature of the hydrocarbon polymer ranges from 40 °C to 70 °C, and a softening point ranges from 90 °C to 120 °C.

According to the proper aspect of the present disclosure, the tire rubber composition may include: 100 phr of the raw rubber; 1 phr to 80 phr of the hydrocarbon polymer; and 30 phr to 180 phr of the plant-based silica.

According to the proper aspect of the present disclosure, the hydrocarbon polymer may be compounded from at least one monomer selected from the group consisting of dicyclopentadiene (DCPD), cyclopentadiene (CPD), C5 hydrocarbon compound, C9 hydrocarbon compound, alpha-methylstyrene (AMS), terpene, and phenol.

According to the proper aspect of the present disclosure, number average molecular weight of the hydrocarbon polymer may range from 350 g/mol to 600 g/mol, and weight average molecular weight may range from 400 g/mol to 900 g/mol.

According to the proper aspect of the present disclosure, the hydrocarbon polymer may have aromaticity ranging from 5% to 60%.

According to the proper aspect of the present disclosure, the plant-based silica may have a BET surface area of 150 m2/g or more.

According to the proper aspect of the present disclosure, the plant-based silica may be derived from at least one selected from the group consisting of rice bran, chaff, barley bran, wheat bran, and straw.

According to the proper aspect of the present disclosure, the plant-based silica may have a CTAB adsorption value of 140 m²/g or more and a pH of 5 to 8.

According to the proper aspect of the present disclosure, the plant-based silica may have δ³⁰Si and δ²⁹Si values of 0.00 or more in formulas 1 and 2. ${δ}^{30} Si \left(%\right) = \left[\frac{{\left(S 30i/S 28i\right)}_{sample}}{{\left(S 30i/S 28i\right)}_{standard}}-1\right] \times 1000$ (Formula 1) ${δ}^{29} Si \left(%\right) = \left[\frac{{\left(S 29i/S 28i\right)}_{sample}}{{\left(S 29i/S 28i\right)}_{standard}}-1\right] \times 1000$ (Formula 2)

In Formula 1, the (³⁰Si/²⁸Si) sample is a ratio of ³⁰Si to ²⁸Si of a test sample, and the (³⁰Si/²⁸Si) standard is a ratio of ³⁰Si to ²⁸Si of a standard material. In Formula 2, a (²⁹Si/²⁸Si) sample is a ratio of ²⁹Si to ²⁸Si of a test sample, and a (²⁹Si/²⁸Si) standard is a ratio of ²⁹Si to ²⁸Si of a standard material.

According to the proper aspect of the present disclosure, the raw rubber may include at least one selected from the group consisting of natural rubber, polybutadiene rubber, polyisoprene rubber, and polystyrene-butadiene rubber, within a range of a glass transition temperature from -150°C to 0°C.

According to another aspect of the present disclosure, there is provided a vehicle tire including the tire rubber composition for summer.

### Advantageous Effects

According to the present disclosure, a tire rubber composition comprising a hydrocarbon polymer and plant-based silica may improve fuel efficiency and wet grip performance compared to existing rubber compositions.

By applying the tire rubber composition, tire compounds with improved performance of wet grip and rolling resistance can be manufactured, and carbon dioxide emissions can be reduced during the acquisition and use of tire raw materials.

### Mode for Invention

Unless otherwise defined, all terms, including technical and scientific terms, used herein have the same meaning as commonly understood by one of ordinary skill in the art to which the present disclosure belongs. In general, the terminology used in the specification is well known and commonly used in the technical field.

It will be further understood that the terms "comprises " and/or "comprising", or "includes" and/or "including", when used in this specification, specify the presence of stated features, regions, integers, steps, operations, elements and/or components, but do not preclude the presence or addition of one or more other features, regions, integers, steps, operations, elements, components and/or groups thereof.

Adhesive resins used in the tire industry include petroleum resins, phenolic resins, and natural resins extracted from natural sources and polymerized. Most adhesive resins are typically used in pellet form as solid resins with a glass transition temperature (Tg) at or above room temperature due to their performance and ease of metering during manufacturing.

However, the improvement in grip performance with the use of adhesive resins results from heat generation and hysteresis due to the resin's robust molecular structure at the frequencies in environments where friction occurs in tire treads, which inevitably leads to degradation in fuel efficiency.

In addition, adhesive resins, which are commonly used as raw materials in press-sensitive adhesives and adhesives, tend to adhere strongly to mills and rotors during the manufacturing process, ultimately reducing field productivity and impairing mixing processability.

Furthermore, compounds used in the treads of summer tires or racing tires typically contain high levels of process oil to reduce hardness and enhance grip. However, such high oil concentrations can sometimes interfere with the generation of shear force between the compound and the rotor in the mixer, leading to processing difficulties.

Therefore, an objective of the present disclosure is to use hydrocarbon polymer with specific property values instead of adhesive resins commonly used in the composition of summer tires that require high levels of grip performance, and to replace mineral-based silica, which is facing challenges due to resource depletion, with plant-based silica, thereby providing a tire rubber composition for summer that can improve grip performance on wet roads, wear resistance, and fuel efficiency, workability during manufacturing process.

Specifically, a tire rubber composition for summer according to the present disclosure includes raw rubber containing unsaturated carbon bonds, a hydrocarbon polymer, and plant-based silica, and uses hydrocarbon polymers with a glass transition temperature between 40°C and 70°C and a softening point between 90°C and 120°C, as a substance included instead of adhesive resins. The tire rubber composition for summer, according to the present disclosure, can produce summer tires with improved fuel performance and wet grip compared to the existing rubber composition.

In an exemplary embodiment of the present disclosure, the tire rubber composition may include the raw rubber of 100 phr, the hydrocarbon polymer of between 1 phr and 80 phr, and the plant-based silica of between 30 phr and 180 phr.

The tire rubber composition may include plant-based silica in a range from 30 phr to 180 phr, preferably, from 50 phr to 150 phr, further preferably, from 80 phr to 130 phr. When plant-based silica is used at less than 30 phr, its reinforcing performance, coming from silica as a reinforcing filler, may be poor, and wet grip performance may not be achieved. However, when the plant-based silica is used in excess of 180 phr, the mixing processability of the rubber composition may be degraded.

According to the present disclosure, the hydrocarbon polymer is included instead of adhesive resins, and have a glass transition temperature of between 40°C and 70°C and a softening point of between 90°C and 120°C.

When the glass transition temperature of the hydrocarbon polymer is less than 40°C, there is a possibility of insufficient wet grip, and when it exceeds 70°C, there is a possibility of degradation of low fuel efficiency performance.

The hydrocarbon polymer may be compounded from one type of monomer selected from hydrocarbons based on dicyclopentadiene (DCPD), cyclopentadiene (CPD), C5 hydrocarbon compound, C9 hydrocarbon compound, C5 and C9 aliphatic resins, Rosin, Alpha-methylstyrene (AMS), terpene, phenol, and the like.

Specifically, the hydrocarbon polymer may be a petroleum resin obtained through copolymerization of C5-series aliphatic olefins and C9-series aromatic olefins and hydrogenation during the thermal cracking process of naphtha. More specifically, the hydrocarbon polymer may be a petroleum resin produced by removing double bonds within molecular structures from a petroleum resin that is polymerized from a mixture of dicyclopentadiene (DCPD), which is separated by dimerizing cyclopentadiene from C5 crude oil, and C9 crude oil, by hydrogenation.

The hydrocarbon polymer of the present disclosure can improve the grip performance and wear resistance at high temperatures and on wet roads. Furthermore, the hydrocarbon polymer of the present disclosure may be used partially or entirely in place of the adhesive resins used as pressure-sensitive adhesives, thereby improving fuel efficiency characteristics, and preventing the processability from being degraded due to high-content adhesive resins in the refining process.

In the exemplary embodiment of the present disclosure, the number average molecular weight of the hydrocarbon polymer is between 350 g/mol and 600 g/mol, and the weight average molecular weight may be between 400 g/mol and 900 g/mol.

When the number average molecular weight of the hydrocarbon polymer is less than 350 g/mol, or the weight average molecular weight is less than 400 g/mol, there is a problem that G' of the compound is reduced, and when the number average molecular weight exceeds 600 g/mol, or the weight average molecular weight exceeds 900 g/mol, there is a problem that induces reduction of the mixing processability.

Meanwhile, the hydrocarbon polymer does not undergo hydrogenation, which allows it to retain a chemical structure that includes a double bond. The presence or absence of double bonds in hydrocarbon polymer can influence the sulfur vulcanization structure formed after the vulcanization process, which can ultimately affect key tire performance characteristics such as wear resistance and rolling resistance.

According to the exemplary embodiment of the present disclosure, the hydrocarbon polymer may have aromaticity between 5 % and 60 %.

When the aromaticity of hydrocarbon polymer is less than 5 %, the mobility of the molecular structure increases, so that the plasticizing effect increases, which reduces the G' of compounds. Furthermore, when the aromaticity exceeds 60 %, the mobility of the molecular structure decreases, so that Tg increases, which degrades the low fuel efficiency performance, which is problematic.

Herein, the tire rubber composition for summer of the present disclosure may include plant-based silica as a reinforcing filler. Herein, it may be preferable to use plant-based silica alone or in combination with carbon black.

According to the exemplary embodiment of the present disclosure, the plant-based silica is measured in accordance with ISO 18852, and may have a BET surface area between 150 m²/g and 300 m²/g.

When the BET surface area of the plant-based silica is less than 150 m²/g, its reinforcing performance, coming from silica as a reinforcing filler, may be poor, and wet grip performance may not be achieved. However, when the BET surface area of the plant-based silica exceeds 300 m²/g, the mixing processability of the rubber composition may be reduced.

According to the exemplary embodiment of the present disclosure, the plant-based silica may be derived from at least one selected from the group consisting of rice bran, chaff, barley bran, wheat bran, and straw.

According to the exemplary embodiment of the present disclosure, the plant-based silica may have a cetyl trimethyl ammonium bromide (CTAB) adsorption value of 140 m²/g or more, and a pH of 5 to 8.

When the CTAB adsorption value of the plant-based silica is less than 140 m²/g, the reinforcing performance coming from silica as a reinforcing filler may be poor. However, when the CTAB adsorption value of the plant-based silica exceeds 250 m²/g, the mixing processability of the rubber composition may be reduced.

When the pH of the plant-based silica is less than 5, the vulcanization of the rubber composition may be delayed. When the pH of the plant-based silica is higher than 8, the vulcanization of the rubber composition may be promoted, which prevents the rubber composition from having proper reinforcement performance.

Furthermore, in the exemplary embodiment of the present disclosure, the plant-based silica may have δ30 Si and 629 Si values of at least 0.00 in formulas 1 and 2.${δ}^{30} Si \left(%\right) = \left[\frac{{\left(S 30i/S 28i\right)}_{sample}}{{\left(S 30i/S 28i\right)}_{standard}}-1\right] \times 1000$ (Formula 1) ${δ}^{29} Si \left(%\right) = \left[\frac{{\left(S 29i/S 28i\right)}_{sample}}{{\left(S 29i/S 28i\right)}_{standard}}-1\right] \times 1000$ (Formula 2)

In Formula 1, the (³⁰Si/²⁸Si) sample is a ratio of ³⁰Si to ²⁸Si of a test sample, and the (³⁰Si/²⁸Si) standard is a ratio of ³⁰Si to ²⁸Si of a standard material. In Formula 2, the (²⁹Si/²⁸Si) sample is a ratio of ²⁹Si to ²⁸Si of a test sample, and the (²⁹Si/²⁸Si) standard is a ratio of ²⁹Si to ²⁸Si of a standard material.

Herein, measurements of ²⁸Si, ²⁹Si, and ³⁰Si in the standard material and the test sample may be performed using any method capable of measuring silicon isotopes in the industry, without limitations. For example, measurements of ²⁸Si, ²⁹Si, and ³⁰Si of the standard material may be performed by dissolving a standard material such as NIST NBS 28 in hydrofluoric acid, and then measuring Si isotope via ICP-MS and performing quantification analysis, and measurements of ²⁸Si, ²⁹Si, and ³⁰Si of the test sample may be performed by gathering tread rubber and eluting Si with hydrofluoric acid, and by inserting tread rubber in a crucible and incinerating it, inserting the resulting ash in hydrofluoric acid for pretreatment, and performing quantification analysis of silicon isotopes using ICP-MS.

In general, silicon (Si) is known to have 24 isotopes with atomic masses ranging from 22 to 45. Among them, ²⁸Si, ²⁹Si, and ³⁰Si are stable isotopes, and exist with rates of 92.23%, 4.67%, and 3.1%, respectively. Mineral-based Si and plant-based Si have a difference in isotope rate.

Accordingly, the tire rubber composition for summer according to the present disclosure is configured to use plant-based silica extracted from plants, in which both the δ³⁰Si and δ²⁹Si values are 0.00 or higher in Formulas 1 and 2, thereby enabling the replacement of mineral-based silica, which faces challenges resulting from resource depletion, with plant-based silica, and simultaneously improving fuel efficiency and wet grip performance.

Meanwhile, some common examples of carbon black may include N110, N121, N134, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990, and N991.

To improve the dispersion of the plant-based silica used as a reinforcing filler, a coupling agent may be added.

The coupling agents may be at least one selected from the group consisting of sulfide-based silane compounds, mercaptan-based silane compounds, vinyl-based silane compounds, amino-based silane compounds, glycidoxy-based silane compounds, nitro-based silane compounds, chloro-based silane compounds, methacrylate-based silane compounds, and combinations thereof.

The coupling agent may be included in an amount of 1 to 20 parts by weight per 100 parts by weight of the raw rubber. When the content of the coupling agent is less than 1 part by weight, the dispersion of the reinforcing filler may be insufficient, which can degrade the rubber's processability or reduce low fuel efficiency performance. When the content of the coupling agent exceeds 20 parts by weight, the interaction between the reinforcing filler and the rubber is strong, which may ensure excellent low fuel efficiency performance, but significantly degrade braking performance.

According to the exemplary embodiment of the present disclosure, the raw rubber may include at least one of natural rubber, polybutadiene rubber, polyisoprene rubber, and polystyrene-butadiene rubber, which has a glass transition temperature within a range from -150 °C to 0 °C.

Meanwhile, the tire rubber composition for summer of the present disclosure may selectively include additional additives, such as a vulcanizing agent, a vulcanizing accelerator, a vulcanizing accelerator activator, an antioxidant, a softening agent, a processing aid, and the like. Any of the various additives mentioned above may be used as long as they are typically used in the field to which the present disclosure belongs, and their contents follow the mixing ratios typically used in tire rubber compositions and are not specifically limited.

A sulfur-based vulcanizing agent is preferably used as the vulcanizing agent described above. The above-mentioned sulfur-based vulcanizing agent may include inorganic vulcanizing agents such as powdered sulfur (S), insoluble sulfur (S), precipitated sulfur (S), and colloidal sulfur. Specifically, the sulfur-based vulcanizing agent may include elemental sulfur or sulfur-generating agents, such as amine disulfide or polymeric sulfur.

It is desirable to include the above-mentioned vulcanizing agent in an amount of 0.5 to 4.0 parts by weight per 100 parts by weight of the raw rubber. This provides an appropriate vulcanization effect, making the raw rubber less heat-sensitive and more chemically stable.

The vulcanizing accelerator is an accelerator that accelerates the vulcanization process or promotes a retarding effect during the initial stages of vulcanization.

Meanwhile, the vulcanization accelerator activator is a compounding agent used in conjunction with the above-mentioned vulcanization accelerator to fully enhance its accelerating effect, and it may be at least one selected from the group consisting of inorganic vulcanization accelerator activator, organic vulcanization accelerator activator, and combinations thereof.

The above-mentioned inorganic vulcanization accelerator activator may be at least one selected from the group consisting of zinc oxide (ZnO), zinc carbonate, magnesium oxide (MgO), lead oxide, potassium hydroxide, and combinations thereof.

The organic vulcanization accelerator activator may be at least one selected from the group consisting of stearic acid, zinc stearate, palmitic acid, linoleic acid, oleic acid, lauric acid, dibutylammonium oleate, derivatives thereof, or combinations thereof.

Specifically, the zinc oxide and the stearic acid can be used together as an organic vulcanization accelerator activator. In this case, the zinc oxide dissolves in the stearic acid to form a complex effective to a vulcanization accelerator, thereby producing sulfur that is conducive to the vulcanization reaction and facilitating the crosslinking of the rubber.

When the zinc oxide and the stearic acid are used together, they may be used in amounts of 1 to 5 parts by weight and 0.5 to 3 parts by weight, respectively, per 100 parts by weight of the raw rubber, to ensure the proper function of the vulcanization accelerator activator. When the amounts of zinc oxide and the stearic acid are below the specified range, the vulcanization rate may slow down, leading to reduced productivity. When the amounts thereof exceed the specified range, scorch may occur, resulting in degraded physical properties.

Meanwhile, the above-mentioned antioxidant is an additive used to stop the chain reaction that causes tires to oxidize spontaneously due to exposure to oxygen. The antioxidant may be one appropriately selected from the group consisting of amine-based antioxidants, phenolic-based antioxidants, quinoline-based antioxidants, imidazole-based antioxidants, metal carbamate salts, wax, and combinations thereof.

Considering the requirements that the antioxidant must have high solubility in rubber, low volatility, and be inert toward rubber in addition to the antioxidant effect, and must not inhibit vulcanization, it may be included in an amount of 1 to 10 parts by weight per 100 parts by weight of the raw rubber.

Meanwhile, the softening agent is added to rubber compositions to impart plasticity to the rubber, thereby facilitating processing, or to reduce the hardness of vulcanized rubber, and it refers to oil-type materials used in rubber compounding or manufacturing. The softening agent may be at least one selected from the group consisting of petroleum-based oils, vegetable oils, and combinations thereof, but is not limited thereto.

In another preferred embodiment of the present disclosure, the present disclosure provides a vehicle tire including the tire rubber composition for summer.

Hereinbelow, the present disclosure will be described in detail with reference to an exemplary embodiment. However, this embodiment is provided to illustrate the present disclosure more specifically, and it will be apparent to those skilled in the art that the scope of the present disclosure is not limited thereto.

Rubber compositions of the examples and comparative examples were prepared using a hydrocarbon polymer (ExxonMobil's Oppera^{™}PR 383) with the properties shown in Table 1 and the composition shown in Table 2 below. The rubber compound is manufactured using a typical tire manufacturing method.

**[Table 1] Physical Properties of Oppera^{™}PR 383 of ExxonMobil Corporation**

| Division | Hydrocarbon polymer additive |
|---|---|
| Softening point (C) | 103 |
| Molecular weight (Mn) | 480 |
| Molecular weight (Mw) | 770 |
| Glass transition temperature(°C) | 55 |
| Aromaticity(%) | 9.7 |

**[Table 2] Rubber Compositions of Comparative Example and Examples: (Unit: phr*)**

| Division | Comparativ e example1 | Example 1 | Example 2 | Example 3 | Example 4 |
|---|---|---|---|---|---|
| SSBR | 100 | 100 | 100 | 100 | 100 |
| Carbon black | 10 | 10 | 10 | 10 | 10 |
| Silica | 120 | 0 | 0 | 0 | 0 |
| Plant-based silica | 0 | 120 | 120 | 120 | 120 |
| Silane | 10 | 10 | 10 | 10 | 10 |
| Hydrocarbo n polymer additive | 0 | 20 | 40 | 60 | 80 |
| Zinc oxide | 2 | 2 | 2 | 2 | 2 |
| Stearic acid | 2 | 2 | 2 | 2 | 2 |
| Antioxidan t | 4 | 4 | 4 | 4 | 4 |
| Process oil | 20 | 20 | 20 | 20 | 20 |
| Sulfur | 1 | 1 | 1 | 1 | 1 |
| Accelerato r | 1 | 1 | 1 | 1 | 1 |

| | | | | | |
|---|---|---|---|---|---|
| *phr: Parts per hundred rubber, the weight of the mixture per 100 parts by weight of raw rubber | | | | | |

The Mooney viscosity, hardness, 300% modulus, and viscoelasticity of the rubber specimens of the examples and the comparative examples prepared using the above composition were measured, and the results are shown in Table 3.

**[Table 3] Rubber Properties of Examples and Comparative Example**

| Division | Comparativ e example1 | Example 1 | Example 2 | Example 3 | Example 4 |
|---|---|---|---|---|---|
| Mooney viscosity (ML1+4) | 86 | 75 | 65 | 55 | 45 |
| hardness | 63 | 61 | 58 | 55 | 53 |
| 300% modulus | 95 | 82 | 75 | 67 | 59 |
| Elongatio n | 580 | 670 | 760 | 850 | 860 |
| 0 °C tan δ | 0.200 | 0.311 | 0.457 | 0.517 | 0.589 |
| 60 °C tan δ | 0.161 | 0.151 | 0.146 | 0.140 | 0.134 |
| LAT-100 (INDEX) | 100 | 102 | 97 | 95 | 94 |

The Mooney viscosity (ML1+4) is the viscosity of unvulcanized rubber measured using a Mooney viscometer. Generally, the rubber is placed at 100°C and preheated for 1 minute, after which the rotor is started, and the value after 4 minutes is measured. The Mooney viscosity is a value measured by recording the torque of an unvulcanized rubber sample as the rotor rotates. When this value is below an appropriate level, the material is considered to have good flow properties and excellent processability.

Hardness indicates the resistance of vulcanized rubber with respect to localized plastic deformation, and a higher value indicates greater hardness.

The 300% modulus represents the tensile strength of a vulcanized rubber specimen when stretched to 300%, and a higher value indicates greater strength.

Elongation is obtained by measuring the elongation rate of a rubber specimen when it breaks during a tensile test.

The 60 °C tan δ is measured through a vulcanized rubber viscoelastic test, and the tan δ values were measured for specimen deformation ranging from 0.5% to 5.0% at 60 °C and a frequency of 10 Hz. Among these, a lower 60°C tan δ value under the 5.0% deformation rate indicates less heat generation and excellent rolling resistance during driving.

As shown in Table 3 above, when comparing Examples 1 to 4, in which hydrocarbon polymer additives and plant-derived silica were applied together according to the composition in Table 2, with the case using conventional silica (Comparative Example 1), the examples exhibit a higher proportion of plasticizer within the compound, resulting in decrease in hardness and the 300% modulus decrease.

Conversely, a higher 0 °C tan δ value, which is used as an indicator of wet grip performance, is advantageous for wet grip performance. Since Examples 1 to 4 have a 0 ° C tan δ value that is at least 10% higher than that of Comparative Example 1, excellent wet grip performance can be expected.

Furthermore, in the low-fuel-efficiency performance, a lower 60 °C tan δ value, which is used as a measure of rolling resistance, is advantageous. Since Examples 1 to 4 exhibit a 60 °C tan δ value that is at least 10% lower than that of Comparative Example 1, advanced low fuel efficiency performance can be expected. Finally, regarding lab wear resistance, according to the results of the LAT-100 test, Examples 1 to 4 have the same level of wear resistance as that of Comparative Example 1, so a similar mileage can be expected.

Hereinabove, the present disclosure has been described in detail through specific embodiments. The embodiments are provided to specifically describe the present disclosure, but the present disclosure is not limited thereto. Within the technical spirit of the present disclosure, it will be apparent that various modifications or changes are possible by those skilled in the art. Therefore, the scope of protection of the present disclosure should be defined by the technical concepts of the accompanied claims.

## Claims

1. A tire rubber composition for summer, the tire rubber composition comprising:
raw rubber including unsaturated carbon bonds, a hydrocarbon polymer, and plant-based silica,
wherein a glass transition temperature of the hydrocarbon polymer ranges from 40 °C to 70 °C, and a softening point ranges from 90 °C to 120 °C.

2. The tire rubber composition of claim 1, further comprising:
100 phr of the raw rubber;
1 phr to 80 phr of the hydrocarbon polymer; and
30 phr to 180 phr of the plant-based silica.

3. The tire rubber composition of claim 1, wherein the hydrocarbon polymer is compounded from at least one monomer selected from the group consisting of dicyclopentadiene (DCPD), cyclopentadiene (CPD), C5 hydrocarbon compound, C9 hydrocarbon compound, alpha-methylstyrene (AMS), terpene, and phenol.

4. The tire rubber composition of claim 1, wherein number average molecular weight of the hydrocarbon polymer ranges from 350 g/mol to 600 g/mol, and weight average molecular weight ranges from 400 g/mol to 900 g/mol.

5. The tire rubber composition of claim 1, wherein the hydrocarbon polymer has aromaticity ranging from 5% to 60%.

6. The tire rubber composition of claim 1, wherein the plant-based silica has a BET surface area of 150 m2/g or more.

7. The tire rubber composition of claim 6, wherein the plant-based silica is derived from at least one selected from the group consisting of rice bran, chaff, barley bran, wheat bran, and straw.

8. The tire rubber composition of claim 6, wherein the plant-based silica has a CTAB adsorption value of 140 m²/g or more and a pH of 5 to 8.

9. The tire rubber composition of claim 1, wherein the plant-based silica has δ³⁰Si and 6²⁹Si values of 0.00 or more in formulas 1 and 2, ${δ}^{30} Si \left(%\right) = \left[\frac{{\left(S 30i/S 28i\right)}_{sample}}{{\left(S 30i/S 28i\right)}_{standard}}-1\right] \times 1000$ (Formula 1) ${δ}^{29} Si \left(%\right) = \left[\frac{{\left(S 29i/S 28i\right)}_{sample}}{{\left(S 29i/S 28i\right)}_{standard}}-1\right] \times 1000 ,$ (Formula 2) and
in Formula 1, (³⁰Si/²⁸Si) sample is a ratio of ³⁰Si to ²⁸Si of a test sample, and (³⁰Si/²⁸Si) standard is a ratio of ³⁰Si to ²⁸Si of a standard material, and in Formula 2, (²⁹Si/²⁸Si) sample is a ratio of ²⁹Si to ²⁸Si of a test sample, and (²⁹Si/²⁸Si) standard is a ratio of ²⁹Si to ²⁸Si of a standard material.

10. The tire rubber composition of claim 1, wherein the raw rubber contains at least one selected from the group consisting of natural rubber, polybutadiene rubber, polyisoprene rubber, and polystyrene-butadiene rubber, within a range of a glass transition temperature from -150°C to 0°C.

11. A vehicle tire comprising the tire rubber composition for summer of any one of claims 1 to 10.
